# EUROPÄISCHE PATENTANMELDUNG

(11) **EP 1 818 669 A1**
(43) Veröffentlichungstag der Anmeldung: **15.08.2007**
(21) Anmeldenummer: 06007153.7
(22) Anmeldetag: 04.04.2006
(51) Int. Cl.: G01N 21/71

(54) **Verfahren und Vorrichtung zur Erfassung einer Komponente in einem Gasstrom**

(30) Priorität: 08.02.2006 DE 102006005823
(71) Anmelder: Linde Aktiengesellschaft, 65189 Wiesbaden (DE)
(72) Erfinder: Danilov, Vladimir, 77694 Kehl (DE); Dietrich, Andreas, 82281 Egenhofen (DE)
(74) Vertreter: Gellner, Bernd

(57) **Zusammenfassung**

Die Erfindung betrifft ein Verfahren und eine Vorrichtung zur Erfassung einer Komponente eines Gasstroms, wobei zumindest ein Teil der von dem Gasstrom emittierten Strahlung detektiert wird, die detektierte Strahlung zu einem Summensignal aufsummiert wird und die 2. Harmonische des Summensignals gebildet wird.

## Beschreibung

Die Erfindung betrifft ein Verfahren und eine Vorrichtung zur Erfassung einer Komponente eines Gasstroms mit mindestens einem Sensor zur Detektierung der von dem Gasstrom emittierten Strahlung.

Bei Anlagen zur Wärmebehandlung ist es Stand der Technik die Zusammensetzung der Gasatmosphäre im Inneren der Anlage zu überwachen. Derartige Kontrollen sind besonders bei nicht vollständig geschlossenen Anlagen von Bedeutung, die beispielsweise als Durchlaufanlagen oder sogenannte offene Öfen konzipiert sind. Bei einer Änderung der Gasatmosphäre im Inneren eines Wärmebehandlungsofens besteht die Gefahr, dass die Qualität der Wärmebehandlung und letztlich die Qualität des behandelten Werkstücks beeinträchtigt wird.

Beim Einsatz einer kontrollierten Atmosphäre zur Wärmebehandlung ist daher zu beachten, dass eine Änderung der Zusammensetzung der kontrollierten Atmosphäre möglichst schnell registriert wird, damit eine ungünstige Zusammensetzung nicht lange auf ein zu behandelndes Werkstück, z.B. auf zu härtenden Stahl, einwirken kann.

Zur Überwachung einer Gasatmosphäre in einem Raum ist es bekannt, aus dem Inneren des Raums Proben zu nehmen und die Zusammensetzung des entnommenen Gases zu analysieren. Bei solchen extraktiven Systemen wird die abgezogene Gasprobe in der Regel aufbereitet, beispielsweise getrocknet, und durch verschiedenartige Messzellen geschickt. So werden zum Beispiel Infrarot-Sensoren zur Untersuchung der Kohlenmonoxid- oder der Kohlendioxid-Konzentration eingesetzt oder paramagnetische Zellen zur Bestimmung des Sauerstoffgehalts.

Darüber hinaus besteht die Möglichkeit, spezielle Messzellen im Inneren des Raums anzubringen. Zumindest die für den Einsatz bei hohen Temperaturen zur Verfügung stehenden Messzellen weisen jedoch in der Regel als Nachteil einen hohen Preis in Verbindung mit einer kurzen Lebensdauer auf und sind mit einer hohen Messungenauigkeit behaftet.

Aufgabe vorliegender Erfindung ist es daher, ein Verfahren und eine Vorrichtung zur Erfassung einer Komponente in einem Gasstrom zu entwickeln. Die Erfassung soll möglichst einfach, preiswert und zuverlässig sein und zumindest eine qualitative Aussage über die Menge der in dem Gasstrom vorhandenen Komponente erlauben.

Diese Aufgabe wird durch ein Verfahren der eingangs genannten Art gelöst, wobei zumindest ein Teil der von dem Gasstrom emittierten Strahlung detektiert wird, die detektierte Strahlung zu einem Summensignal aufsummiert wird und die 2. Harmonische des Summensignals gebildet wird.

Die erfindungsgemäße Vorrichtung zur Erfassung einer Komponente eines Gasstroms besitzt mindestens einen Sensor zur Detektierung der von dem Gasstrom emittierten Strahlung, und ist dadurch gekennzeichnet, dass eine Auswerteeinrichtung vorgesehen ist, welche das von dem Sensor oder den Sensoren gelieferte Signal über alle Frequenzen zu einem Summensignal aufsummiert und welche die 2. Harmonische des Summensignals bildet.

Bei den bekannten optischen Messmethoden werden die unterschiedlichen Gaskomponenten aufgrund ihrer Emissions- oder Absorptionslinien unterschieden. Hierzu wird der für die Messung eingesetzte Sensor gezielt auf eine der Emissionslinien der zu untersuchenden Komponente des Gasstroms eingestellt.

Erfindungsgemäß wird dagegen nicht eine einzelne Spektrallinie ausgewertet, sondern es werden die Emissionen der Komponente über einen größeren Teilbereich des Spektrums detektiert, das heißt es erfolgt eine breitbandige Aufnahme des emittierten Spektrums. Aus den detektierten Emissionen bei den verschiedenen Wellenlängen wird ein Summensignal gebildet, welches anschließend zweifach nach der Zeit abgeleitet wird. Der zeitliche Verlauf des so ermittelten Signals liefert dann qualitative Aussagen über den Anteil der Komponente in dem Gasstrom.

Die Erfindung beruht darauf, nicht nur die Spektrallinie selbst, sondern auch Oberschwingungen zu messen. Die Oberschwingungen enthalten wesentliche Informationen über die untersuchte Komponente. Von Vorteil werden daher mehrere Emissionslinien der Komponente detektiert werden.

Das erfindungsgemäße Verfahren erlaubt qualitative Aussagen über die Menge der untersuchten Komponente. Von Vorteil werden diese qualitativen Ergebnisse mittels einer konventionellen Messung der Konzentration oder Menge der Komponente in dem Gasstrom kalibriert. Das heißt, die Menge oder Konzentration der Komponente wird zumindest einmal absolut gemessen und der funktionale Zusammenhang mit der 2. Harmonischen des Summensignals bestimmt. Auf diese Weise kann bei späteren Messungen, ohne dass erneut eine Absolutmessung durchgeführt werden müsste, aus der erfindungsgemäß ermittelten 2. Harmonischen auf die absoluten Mengen der Komponente in dem Gasstrom geschlossen werden.

Bevorzugtes Anwendungsgebiet der Erfindung ist die Untersuchung der Atmosphäre oder des Abgases eines Industrieofens, insbesondere eines Schmelzofens.

Insbesondere besteht in der Wärmebehandlung, beispielsweise beim Einschmelzen metallischer Stoffe, der Bedarf, die Sauerstoffzufuhr in den Wärmebehandlungsofen in Abhängigkeit von der Kohlenmonoxid-Konzentration in der Behandlungsatmosphäre zu regeln. Dies gilt weiterhin für alle Brennersysteme, bei denen ein kohlenstoffhaltiger Brennstoff, zum Beispiel Erdgas, Propan oder Öl, eingesetzt wird und Kohlenmonoxid im Abgas entstehen kann. Eine besonders bevorzugte Ausführungsform der Erfindung zielt deshalb auf die Erfassung des in einem Gasstrom enthaltenen Kohlenmonoxids.

Insbesondere bei diesen Anwendungen ist es vorteilhaft, wenn zumindest ein im Infraroten liegender Teil der von dem Abgas emittierten Strahlung detektiert wird. Kohlenmonoxid, aber auch Kohlendioxid, besitzen ein Emissionsspektrum im Infraroten. Als Infrarotstrahlung wird im Folgenden der Spektralbereich zwischen sichtbarem Licht und der langwelligeren Mikrowellenstrahlung bezeichnet. Dies entspricht einem Wellenlängenbereich von etwa 780 nm bis 1 mm.

Durch die Messung im Infrarotbereich werden die Grundwellen als auch die Oberwellen der Emissionsstrahlung erfasst. So liegen beispielsweise die Emissionslinien von Kohlenmonoxid im Infraroten relativ dicht beieinander. Durch die Detektierung der im Infraroten emittierten Strahlung können mehrere Kohlenmonoxid-Spektrallinien und deren Oberwellen bestimmt werden, welche nach der erfindungsgemäßen Weiterverarbeitung, das heißt Aufsummierung und anschließender zweifacher Differenzierung, den Kohlenmonoxid-Gehalt in dem Gasstrom sehr gut widerspiegeln.

Insbesondere zur Erfassung von Kohlenmonoxid oder Kohlendioxid hat es sich als günstig erwiesen, zumindest die von dem Abgas im Wellenlängenbereich zwischen 5 µm und 10 µm, vorzugsweise die zwischen 1 µm und 15 µm emittierte Strahlung zu detektieren.

Die erfindungsgemäße Erfassung und Auswertung einer Komponente des Gasstroms wird von Vorteil zur Kontrolle oder Regelung des Gasstroms genutzt. Besonders bevorzugt findet die Erfindung bei der Kontrolle und / oder Regelung von Wärmebehandlungsprozessen Anwendung. Hierzu werden ein oder mehrere Komponenten der Wärmebehandlungsatmosphäre erfindungsgemäß erfasst und die Mengen der extern der Wärmebehandlungsatmosphäre zugeführten Gase in Abhängigkeit von dieser Komponente geregelt. Die Regelung erlaubt eine exakte Abstimmung der Atmosphäre auf die zu behandelnden Produktqualitäten und damit eine sehr gute Reproduzierbarkeit.

Zum Beispiel kann bei einem mit einem Brenner befeuerten Schmelzprozess die Menge an Kohlenmonoxid im Abgas durch Messung der Emissionslinien im Infraroten, anschließende Aufsummierung der gemessenen Werte über alle Frequenzen und Bildung der zweiten Harmonischen erfasst werden. In Abhängigkeit von dem so ermittelten Kohlenmonoxid-Gehalt im Abgas wird der Brenner geregelt, insbesondere die dem Brenner zugeführte Sauerstoffmenge nachgefahren, um eine Reduzierung des Kohlenmonoxid-Anteils zu erreichen.

Die erfindungsgemäße Vorrichtung umfasst mindestens einen Sensor zur Detektierung der von dem Gasstrom emittierten Strahlung und eine Auswerteeinrichtung, welche das von dem Sensor oder den Sensoren gelieferte Signal über alle Frequenzen zu einem Summensignal aufsummiert und welche die 2. Harmonische des Summensignals bildet.

Der Sensor ist breitbandig, das heißt er besitzt über einen relativ breiten Wellenlängenbereich eine hohe Messempfindlichkeit. Beispielsweise wird von Vorteil zur Erfassung des Gehalts an Kohlenmonoxid, welches ein im Infraroten liegendes Emissionsspektrum besitzt, ein Sensor eingesetzt, der hauptsächlich im Infraroten empfindlich ist. Es hat sich aber auch als günstig erwiesen, wenn der Sensor zusätzlich eine geringe Empfindlichkeit im ultravioletten Spektralbereich aufweist.

Die Erfindung hat gegenüber den bekannten Verfahren und Vorrichtungen wesentliche Vorteile:
Die erfindungsgemäße Messung ist relativ preiswert und sowohl technisch als auch mechanisch leicht zu installieren und zu implementieren. Die ermittelten Signale, das heißt die 2. Harmonischen des Summensignals, bilden den laufenden Prozess sehr gut ab. Im Gegensatz zu den extraktiven Verfahren, bei denen eine Gasprobe dem Gasstrom oder der zu untersuchenden Atmosphäre entnommen wird, ist keine weitere Aufbereitung der Messgase erforderlich. Es sind weder Filter noch Messgaskühler zur Entfernung von Wasser nötig. Auch ist das erfindungsgemäße System unabhängig vom Staubgehalt der Atmosphäre oder des Gasstromes.

## Patentansprüche

1. Verfahren zur Erfassung einer Komponente eines Gasstroms, **dadurch gekennzeichnet, dass** zumindest ein Teil der von dem Gasstrom emittierten Strahlung detektiert wird, dass die detektierte Strahlung zu einem Summensignal aufsummiert wird und dass die 2. Harmonische des Summensignals gebildet wird.

2. Verfahren nach Anspruch 1, **dadurch gekennzeichnet, dass** mehrere Emissionslinien der Komponente detektiert werden.

3. Verfahren nach einem der Ansprüche 1 oder 2, **dadurch gekennzeichnet, dass** eine Komponente des Abgases oder der Atmosphäre eines Industrie- oder Wärmebehandlungsofens, insbesondere eines Schmelzofens, erfasst wird.

4. Verfahren nach einem der Ansprüche 1 bis 3, **dadurch gekennzeichnet, dass** die Konzentration der Komponente in dem Gasstrom gemessen wird und dass die 2. Harmonische des Summensignals mittels der gemessenen Konzentration kalibriert wird.

5. Verfahren nach einem der Ansprüche 1 bis 4, **dadurch gekennzeichnet, dass** das in dem Gasstrom enthaltene Kohlenmonoxid erfasst wird.

6. Verfahren nach einem der Ansprüche 1 bis 5, **dadurch gekennzeichnet, dass** das im Abgas eines Brenners vorhandene Kohlenmonoxid erfasst wird, wobei zumindest ein im Infraroten liegender Teil der von dem Abgas emittierten Strahlung detektiert wird.

7. Verfahren nach einem der Ansprüche 1 bis 6, **dadurch gekennzeichnet, dass** zumindest die von dem Abgas im Wellenlängenbereich zwischen 5 µm und 10 µm, vorzugsweise die zwischen 1 µm und 15 µm emittierte Strahlung detektiert wird.

8. Verfahren nach einem der Ansprüche 6 oder 7, **dadurch gekennzeichnet, dass** der Brenner in Abhängigkeit von der 2. Harmonischen des Summensignals geregelt wird.

9. Vorrichtung zur Erfassung einer Komponente eines Gasstroms mit mindestens einem Sensor zur Detektierung der von dem Gasstrom emittierten Strahlung, **dadurch gekennzeichnet, dass** eine Auswerteeinrichtung vorgesehen ist, welche das von dem Sensor gelieferte Signal über alle Frequenzen zu einem Summensignal aufsummiert und welche die 2. Harmonische des Summensignals bildet.
